# EUROPEAN PATENT APPLICATION

(11) **EP 2 620 933 A1**
(43) Date of publication of application: **31.07.2013**
(21) Application number: 12152402.9
(22) Date of filing: 25.01.2012
(51) Int. Cl.: G09B 5/06

(54) **Method and system for automated production of audiovisual animations**

(71) Applicant: Christoph Bertsch GmbH, 70178 Stuttgart (DE)
(72) Inventor: Weinmann, Rüdiger, 67294 Morschheim (DE)
(74) Representative: Wegner, Hans

(57) **Abstract**

The present invention relates to a computer-implemented method for the automated production of an audiovisual animation (200), in particular a tutorial video, wherein the method comprises the following steps:
a. obtaining (1000) a slide show (100) created using a presentation program, wherein the slide show (100) comprises one or more graphic images (110) and one or more portions of text (120);
b. automatically inserting (3000) one or more entry animations (230) for the one or more graphic images (110) into the slide show (100);
c. automatically generating (4000) one or more speech sequences (220) based on the one or more portions of text (120) and inserting the one or more speech sequences (220) into the slide show (100); and
d. exporting (7000) the slide show (100) to produce the audiovisual animation (200).

## Description

### 1. Technical Field

The present invention relates to a method and system for the automated production of audiovisual animations, in particular tutorial videos.

### 2. The Prior Art

In the prior art, the concept of E-learning, which is essentially the computer and network-enabled transfer of skills and knowledge, has become increasingly popular. E-learning, also commonly referred to by abbreviations such as CBT (Computer-Based Training), IBT (Internet-Based Training) or WBT (Web-Based Training), generally comprises all forms of electronically supported learning and teaching including Web-based learning, computer-based learning, virtual education and digital collaboration. Content is delivered via the Internet, intranet/extranet, audio and/or video, CD-ROM, etc. It can be self-paced or instructor-led and includes media in the form of text, image, animation, streaming video and/or audio.

One particularly popular type of E-learning is based on the concept of providing explanations of complex topics, products or problems in the form of tutorial videos. Such tutorial videos typically use visual language which is reduced to the essential, e.g. using only cartoon-like graphics accompanied by spoken explanations, and is therefore particularly intuitive and memorable. An example of such a video tutorial format is simpleshow of applicant (cf. www.simpleshow.com).

However, producing a high-quality tutorial video, e.g. using the simpleshow format, is very laborious, since it requires professional studio equipment such as cameras, cutting and sound recording/scoring equipment, as well as comprehensive skills concerning such professional equipment. As a result, the production of a high-quality tutorial video requires the assistance of professional personnel and is normally performed in a complex process including an initial briefing, the preparation of a text concept, and the development of a storyboard, followed by the above-explained laborious production process using professional equipment.

It is therefore the technical problem underlying the present invention to provide an approach for producing audiovisual animations, in particular, tutorial videos, without the need for complex professional studio equipment and performable by non-professional users. On the other hand, the video tutorials produced by such an approach should meet the same high quality standards as provided by the conventional professional approach, thereby at least partly overcoming the above explained disadvantages of the prior art.

### 3. Summary of the Invention

This problem is according to one aspect of the invention solved by a computer-implemented method for the automated production of an audiovisual animation, in particular a tutorial video. In the embodiment of claim 1, the method comprises the following steps:
a. obtaining a slide show created using a presentation program, wherein the slide show comprises one or more graphic images and one or more portions of text;
b. automatically inserting one or more entry animations for the one or more graphic images into the slide show;
c. automatically generating one or more speech sequences based on the one or more portions of text and inserting the one or more speech sequences into the slide show; and
d. exporting the slide show to produce the audiovisual animation.

Accordingly, the above embodiment provides a computer-implemented process which enables a user to create an audiovisual animation, such as a tutorial video, without having to employ complex professional equipment. Rather, the user only has to provide a slide show created using a presentation program as input to the proposed method. The term "presentation program" refers to any computer software used to create and display information in the form of a slide show, i.e. a definition of information on a series of slides. Examples of conventional presentation programs are Microsoft PowerPoint, Corel Presentations, Google Docs, OpenOffice.org Impress or Apple Keynote (see also http://en.wikipedia.org/wiki/Presentation_program and http://en.wikipedia.org/wiki/Slide_show).

The slide show obtained in the above step a. comprises one or more graphic images and one or more portions of text. The portions of text preferably comprise text created by the user which contains the explanatory content of the audiovisual animation to be produced. The graphic images are preferably selected by the user from a plurality of pre-defined images, also called "scribbles" (as will be explained in more detail further below), and determine the visual part of the explanatory animation.

The original slide show provided by the user is then automatically enhanced by means of the proposed method (wherein automatically means without any further user input). This includes inserting into the slide show one or more entry animations for the provided graphic images. Such entry animations serve for drawing the viewer's attention to the corresponding graphic images while they enter the animation. This allows to steer the viewer's attention to the respective graphic images in a particularly controlled manner, leading to very high-quality explanatory tutorial videos which convey the explanatory content in an optimized manner to the viewer. Further, based on the provided portions of text, one or more speech sequences are automatically generated and inserted into the slide show. Accordingly, the written text provided by the user is spoken to the viewer when the final animation is played, which results in particularly professional high-quality animations. Preferably, the generation of the speech sequences is performed using text-to-speech tools such as Google Translate. Lastly, the slide show enhanced as described above is exported to produce the audiovisual animation.

In summary, the above method outputs very high-quality audiovisual animations comprising spoken text and animated graphics that steer the viewer's attention and focus in a particularly controlled manner, so that the explanatory content is conveyed to the viewer in an improved way. Importantly, the only input needed from a user is a conventional slide show with graphic images and portions of text, which can be easily provided using conventional presentation programs, while the remaining steps of the method are performed fully automated. As a result, the produced audiovisual animations meet the high-quality standards of professional video tutorials, but without the need for complex professional production equipment.

In a preferred embodiment of the above method, the one or more entry animations comprise an animation of a human hand moving the one or more graphic images into a visual area of the audiovisual animation. Furthermore, if the slide show obtained in step a. comprises at least two slides, the method preferably comprises the further step of automatically inserting one or more transition animations for transitioning between the at least two slides, in particular animations of a human hand performing a wiping movement which at least partly clears a visual area of the audiovisual animation. Additionally or alternatively, the one or more entry animations and / or the one or more transition animations may comprise one or more sound effects to even better steer the viewer's attention. Accordingly, the produced audiovisual animations draw the viewer's attention to the explained content in a particularly advantageous manner, thereby leading to very professional tutorial videos. It should be noted that, however, no additional input is needed from the user, besides the simple slide show explained further above.

In a further aspect of the present invention, the method comprises the further steps of automatically removing from or making invisible in the slide show the one or more portions of text before the step of exporting the slide show; and automatically re-inserting into or making visible in the slide show the one or more portions of text after the step of exporting the slide show. Accordingly, before the slide show enhanced as described above is exported, the text portions are removed/made invisible, so that the text content is only present in the form of the one or more speech sequences. However, after the exporting of the slide show is completed, the text portions are again re-inserted/made visible, so that the user is able to edit and fine-tune the slide show after having inspected the produced audiovisual animation. This aspect allows a user to create a given audiovisual animation in an iterative, stepwise manner, but avoids that the contents which were automatically added to the slide show distract the (non-professional) user.

In yet another aspect, the method may comprise the further step of automatically removing from the slide show the one or more entry animations and / or the one or more transition animations, after the step of exporting the slide show. Accordingly, after the audiovisual animation has been produced, the animations inserted by the present method are removed from the slide show, so that the user of the slide show is able to edit and fine-tune the slide show after having inspected the produced audiovisual animation.

The slide show may comprise one or more references to or thumbnails of the one or more graphic images and the method may comprise the further step of obtaining the one or more graphic images from a media library. Preferably, the media library comprises high-quality versions of the graphic images selected by the user, thereby leading to particularly professional audiovisual animations.

In one embodiment, the step of exporting the slide show to produce the audiovisual animation comprises initiating an export function of a presentation program. Accordingly, the final audiovisual animation video tutorial is generated in a particularly efficient manner, e.g. using Microsoft PowerPoint's built-in "export to video" function.

In a further embodiment, the step of exporting the slide show to produce the audiovisual animation may comprise the steps of playing the slide show; capturing successive images of the played slide show and storing the captured images on a storage device; generating an audio track from the one or more speech sequences; and combining the captured images and the audio track into a video file to produce the audiovisual animation. Accordingly, the final audiovisual animation video is produced independent of the used presentation program.

Preferably, the methods explained above are performed by a plugin of a presentation program. Accordingly, the user is enabled to use conventional presentation programs which the user is used to work with, while the advantageous automated production of the audiovisual animation is performed in the background, i.e. by plugin functionality to the conventional presentation program.

Furthermore, the plugin may be provided on a client computer and the media library may be provided on a server computer, wherein the client computer and the server computer are connected over a network, such as the Internet. Accordingly, the plugin operating at the client may during runtime download the (or additional) graphic icons, sound effects, entry animations and / or transition animations, so that the functionality of the plugin may be flexibly enriched with additional content.

In another aspect of the present invention, the step of exporting the slide show to produce the audiovisual animation may be performed by a rendering engine, wherein the plugin is provided on a client computer and the rendering engine is provided on a server computer, wherein the client computer and the server computer are connected over a network, such as the Internet. Accordingly, the (more laborious) exporting step may be offloaded from the client computer and performed on a distinct server hosting the rendering engine.

The present invention also provides a computer program comprising instructions for implementing any of the above-explained methods, as well as a system for the automated production of an audiovisual animation, in particular a digital video clip, adapted for performing any of the above-explained methods. As already explained above, the provided system is preferably a plugin of a presentation program.

### 4. Short Description of the Drawings

In the following detailed description, presently preferred embodiments of the invention are further described with reference to the following figures:
- Fig. 1:: A schematic illustration of a slide show used in an embodiment of the present invention;
- Fig. 2:: A schematic illustration of an audio visual animation produced in accordance with an embodiment of the present invention;
- Fig. 3:: A schematic illustration of an entry animation in accordance with an embodiment of the present invention;
- Fig. 4:: A schematic illustration of a transition animation in accordance with an embodiment of the present invention;
- Fig. 5:: A flowchart illustrating a method for the automated production of an audiovisual animation in accordance with an embodiment of the present invention;
- Fig. 6:: A schematic illustration of a graphical user interface of a presentation program plugin in accordance with an embodiment of the present invention;
- Figs. 7 and 8:: Block diagrams illustrating various system architectures of embodiments of the present invention; and
- Fig. 9:: A code listing illustrating an exemplary XML file in accordance with an embodiment of the present invention.

### 5. Detailed Description

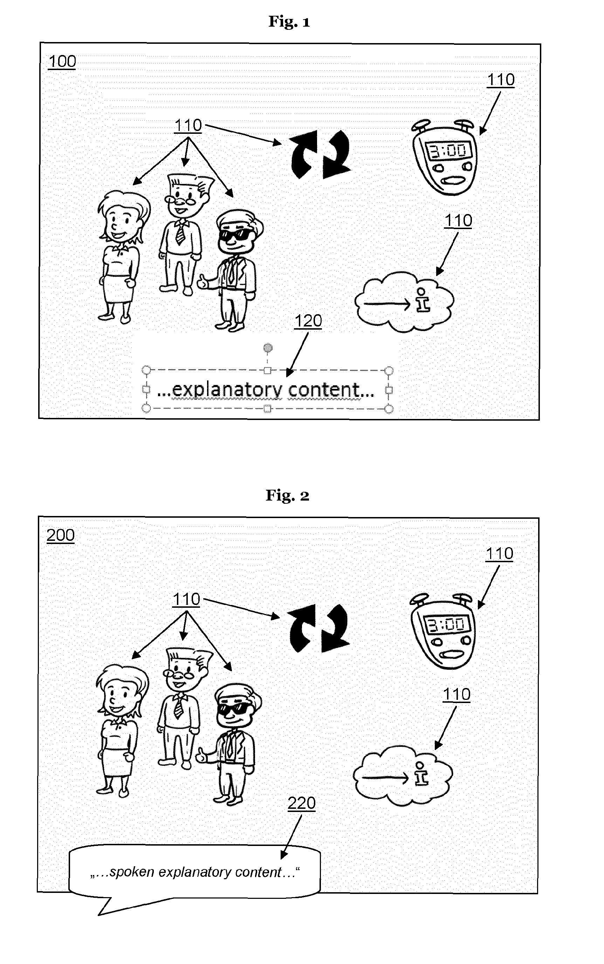

Fig. 1 illustrates an example of a slide show 100 (more precisely one out of one or more slides of a slide show), which serves as an input into a generator tool and method of the present invention. As can be seen, the exemplary slide show 100 comprises six graphic images 110 (also referred to as "scribbles"), which in this embodiment are simple graphical representations of people, devices, arrows, and other icons serving to explain a particular topic, product, process or problem to the viewer. The slide show 100 of Fig. 1 also comprises a portion of text 120 which determines the explanatory content to be conveyed by the audiovisual animation 200 to be produced.

Fig. 2 illustrates an exemplary freeze frame of an audiovisual animation 200 in the form of a tutorial video clip, which is the output of the generator tool and method of the present invention. As can be seen, the animation 200 comprises the graphic images 110 (which are now animated; see further below) and the portion of text 120 was replaced by a speech sequence 220, which is played when the animation 200 is played (illustrated by the speech bubble 220 in Fig. 2, which is of course not displayed in the actual animation 200).

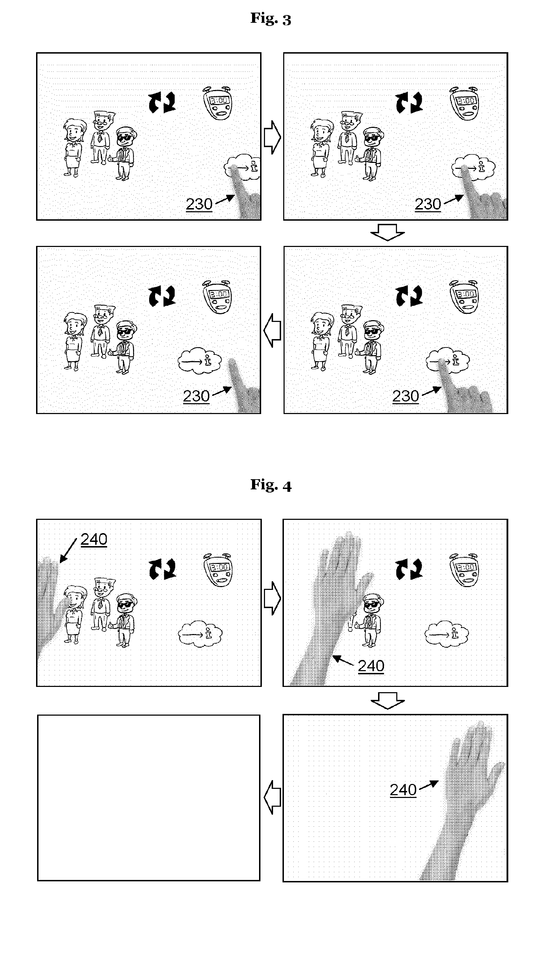

An example of an entry animation 230 created by embodiments of the present invention is shown in Fig. 3. As can be seen, the graphic images 110 of an animation 200 are moved (preferably one after the other) into the visual area of the audiovisual animation 200 by means of a human hand (as indicated by the following sequence of pictures in Fig. 3: top-left, top-right, bottom-right). The human hand moves out of the visual area (see the bottom-left picture in Fig. 3) once the graphic image 110 is in place. Furthermore, Fig. 4 shows an example of a transition animation 240 between the different scenes of an audiovisual animation 200. As can be seen, such a transition is represented by means of a human hand wiping over the visual area, thereby wiping away any graphic images 110 shown in a first scene (as indicated by the following sequence of pictures in Fig. 4: top-left, top-right, bottom-right), so that the visual area is cleared (see the bottom-left picture in Fig. 4) and the subsequent scene can be established.

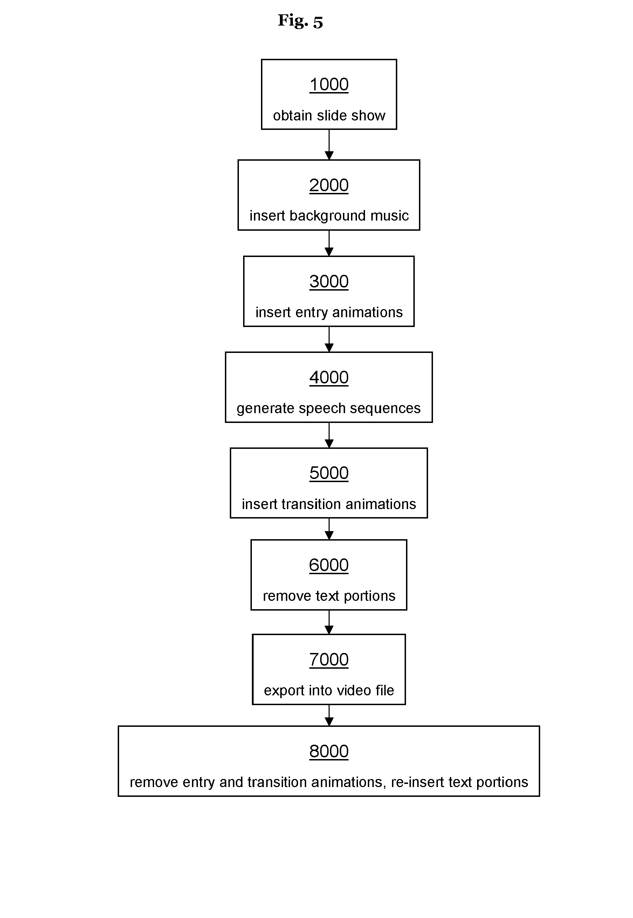

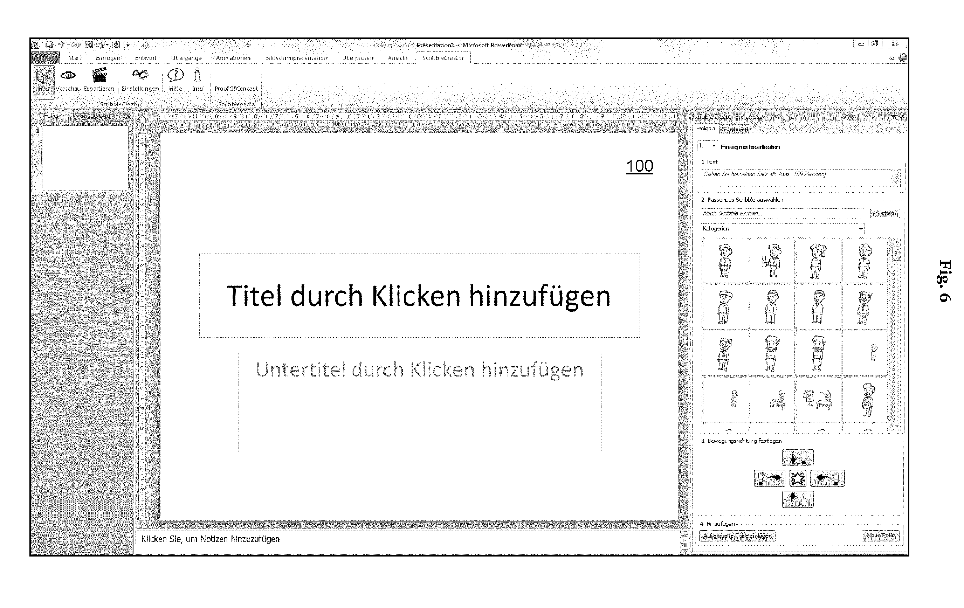

In the following, a presently preferred embodiment of the invention is described with respect to a method as schematically shown in Fig. 5. The generator tool of the invention performing the explained method is preferably a plugin of a presentation program (such as Microsoft PowerPoint) and takes as input a slide show 100 (cf. Fig. 1) which was created using the plugin. A preferred embodiment of the graphical user interface of the plugin is schematically shown in Fig. 6. As can be seen, the user is in this embodiment provided with a graphical user interface for creating a slide show 100. In the illustrated embodiment, the graphical user interface allows the user to perform the following actions:
- select one of a plurality of pre-defined graphic images 110 (also referred to as "scribbles");
- write a portion of text 120 associated with the selected scribble 110 (optional, i.e. not every scribble 110 has an associated text portion 120);
- select one of a plurality of entry animations for the selected scribble 110 (e.g. comprising "entry from the left", "entry from the right", "entry from the top", "entry from the bottom" and "pop-up").

The user may then place the above elements onto a slide of the slide show 100, wherein the scribble 110 and the portion of text 120 are preferably grouped together using functionality of the underlying presentation program. In one embodiment, the grouping is assigned a "fly in" animation effect, the position and direction of which is determined depending on the type of entry animation chosen. The user may repeat the above steps until all scribbles 110 and text portions 120 have been placed onto the current slide and may then move on to create any number of subsequent slides. Preferably, the sequence of slides in the slide show 100 determines the later sequence of "scenes" of the audiovisual animation 200 and the sequence of creation of scribbles 110 per slide determines the sequence of appearance of the scribbles 110 within the audiovisual animation 200.

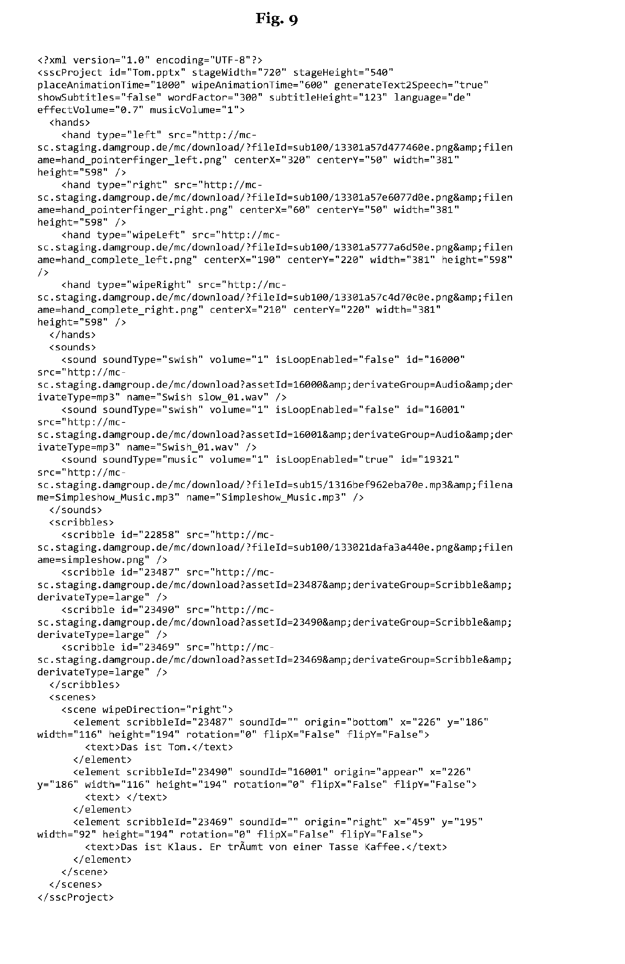

Returning to Fig. 5, the method of automatic production of an audiovisual animation 200 starts with step 1000, where a slide show 100 as described above is obtained. In one embodiment, step 1000 comprises obtaining an XML file defining the slide show 100 and/or using an interface (e.g. an application programming interface, API) of the presentation program to obtain XML data defining the slide show 100. An example of such an XML file is illustrated in Fig. 9. As can be seen, the XML file comprises, for a given slide show 100, definitions of entry animations 230 (cf. the XML tags <hand> with attributes type="left" and type="right"), transition animations 240 (cf. the XML tags <hand> with attributes type="wipeLeft" and type="wipeRight"), sound effects (cf. the XML tags <sound> with attribute soundType="swish"), background music (cf. the XML tag <sound> with attribute soundType="music"), scribbles/graphic images 110 (cf. the XML tags <scribble>) and scenes (cf. the XML tags <scene>).

In the optional step 2000, background music is added to the slide show 100, preferably to the first slide. In one embodiment, the background music may have been selected by the user beforehand. The background music is played automatically once the resulting audiovisual animation 200 is played.

In step 3000, an entry animation 230 is automatically generated for each scribble 110. In one embodiment, this comprises determining the position of the scribble 110 and / or creating an image of a human hand for each scribble 110. The image of the human hand is associated with an animation path and / or a sound effect is associated therewith, preferably a wiping sound. The animation path may be calculated based on the position of the respective scribble 110 and / or the entry animation (see further above), so that in the final audiovisual animation 200, the human hand appears to move the scribble 110 into the visual area (cf. Fig. 3 described further above).

In step 4000, the text portions 120 comprised in the slide show 100 are automatically converted into speech sequence sound files 220 using a text-to-speech engine, such as Google Translate. The generated sound files 220 are preferably added automatically to the corresponding grouping (see above) as an animation effect extension of the underlying presentation program.

In step 5000, a transition animation 240 is automatically generated between each pair of slides in the slide show 100. In one embodiment, this comprises adding an image of a human hand and a white trapezoid element onto the current slide, which are simultaneously moved over the slide to appear as if the human hand wipes empty the current scene (cf. Fig. 4). Also the transition animations 240 may be associated with a sound effect, in particular a wiping sound.

In step 6000, the text portions 120 are removed from the slide show 100. In an alternative embodiment, the text colour of the text portions 120 is set to transparent. This serves for making the text portions 120 (which will be replaced by the generated speech sequences 220) invisible in the exported audiovisual animation 200.

In a further optional step (not shown in Fig. 5), the graphic images 110 selected by the user and defined in the slide show 100 are only small thumbnails. Before producing the audiovisual animation 200, the method obtains high-quality graphic images 110 which are preferably stored on a media library and can be accessed by the generator tool over a network such as the internet. Similarly, also the sound effects explained herein may be obtained, i.e. downloaded, from the media library.

It should be appreciated that the above-explained steps 2000 - 6000 are to be understood as "post-production" steps and may be performed in any order, sequentially or at least partly in parallel to each other.

In step 7000, the slide show 100 enhanced as described above is exported into a video file to produce the audiovisual animation 200, which is then preferably displayed to the user. In one embodiment, the exporting is performed using the "export to video" functionality of the underlying presentation program.

In the final step 8000 shown in Fig. 5, all animations (i.e. entry animations 230 and transition animations 240) are automatically removed from the slide show 100 and the text portions 120 are reinserted (of set to a visible text colour, respectively), so that the user may continue editing the slide show 100 to develop a new version of the audiovisual animation 200.

As explained above, the basic concept of the method and generator tool of the present invention is the automated production of an audiovisual animation video clip 200 based only on graphic 110 and text 120 data provided by a user. The graphics / scribbles 110 are moved onto the screen by a human hand and the text is read out to the viewer. As a result, the audiovisual animations 200, despite being visually appealing and steering the viewer's attention in a controlled manner due to the employed graphical animation effects, are very easy to create, since the method requires as input only a slide show created by the user by means of a conventional presentation program. No complex professional equipment, such as cameras, cutting and sound recording/scoring equipment, is needed.

In one embodiment, the above-explained method is performed by a system (also called "scribble clip creator") comprising a plugin of a presentation program and / or a rendering engine.

In one embodiment, the plugin is a plugin / add-in to Microsoft's PowerPoint presentation program and is implemented using Microsoft Visual Studio 2010, C# and the Microsoft .Net Framework 4. The output of the PowerPoint plugin is XML (see above) comprising all information for defining the slide show 100 created in PowerPoint.

The rendering engine takes the XML as input and analyses it. In one embodiment, this comprises the following steps:
- downloading high-quality images of the scribbles 110 referenced in the XML and / or downloading sounds for the scribbles 110 referenced in the XML;
- performing text-to-speech generation (as described further above);
- generating the individual scenes of the audiovisual animation 200 based on the XML slide show definition (as described further above);
- playing the scenes one after the other;
- capturing successive still images of the played scenes and storing them on a hard drive of the underlying computing system;
- creating a sound file (preferably in WAVE format) comprising the read-out text portions;
- combining the still images and the sound file into a video (e.g. H.264, AVI), preferably using FFMpeg;
- deleting temporary files

In on embodiment, the above rendering engine uses Adobe Flex 4.5 in Adobe Air 3.0, wherein FFMpeg is used for video rendering and Google Translate is used as a text-to-speech engine.

Lastly, one embodiment of the media library storing the scribbles 110, graphics for the entry and/or transition animations and / or sound effects (also referred to as "media cockpit") is based on Java 6, JavaServer Pages (JSP), the Spring Framework, Apache Wicket and Hibernate (Java).

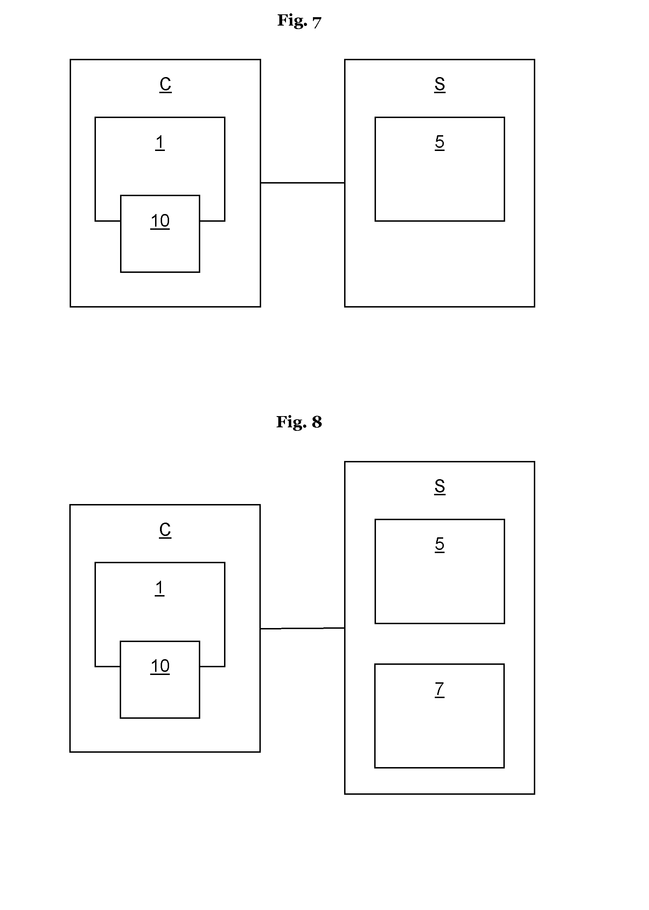

Fig. 7 illustrates a system architecture according to one embodiment of the present invention. As can be seen, a client computer C comprises a presentation program 1. A plugin 10 (as explained further above) is also provided at the client C. In the embodiment of Fig. 7, the exporting step 7000 (cf. Fig. 5) is performed using an "export to video" functionality provided by the presentation program 1 and the graphic icons 100, sound effects, etc. are obtained by the plugin 10 from a media library 5. In particular, the graphical user interface of the plugin 10 (cf. Fig. 6) may comprise a panel (cf. the rightmost panel in Fig. 6) into which the graphic icons 100 may be downloaded from the media library 5. In Fig. 7, the media library 5 is located on a server S distinct from the client C and preferably connected over a network such as the Internet. This embodiment has the advantage that additional graphic icons 100, sound effects, etc. may be downloaded at any time in order to upgrade the plugin 10 on the client C.

A further system architecture according to an embodiment of the invention is shown in Fig. 8. Here, the server S comprises a rendering engine 7 (as explained further above). Accordingly, after the slide show 100 was created using the plugin 10 of the presentation program 1 located on the client C, the output of the plugin 10 defining the slide show 100 (preferably in XML format; see above) is sent to the server S and processed by the rendering engine 7, as already described above. This embodiment has the advantage that the processing of the slide show 100 to produce the final audiovisual animation is offloaded from the client C, so that less processing resources are required for the client C. While in the embodiment of Fig. 8 the server S also hosts the above-described media library 5, the media library 5 and the rendering engine 7 may also be located on different servers S.

## Claims

1. A computer-implemented method for the automated production of an audiovisual animation (200), in particular a tutorial video, wherein the method comprises the following steps:
a. obtaining (1000) a slide show (100) created using a presentation program, wherein the slide show (100) comprises one or more graphic images (110) and one or more portions of text (120);
b. automatically inserting (3000) one or more entry animations (230) for the one or more graphic images (110) into the slide show (100);
c. automatically generating (4000) one or more speech sequences (220) based on the one or more portions of text (120) and inserting the one or more speech sequences (220) into the slide show (100); and
d. exporting (7000) the slide show (100) to produce the audiovisual animation (200).

2. The method of claim 1, wherein the one or more entry animations (230) comprise an animation of a human hand moving the one or more graphic images (110) into a visual area of the audiovisual animation (200).

3. The method of claim 1 or 2, wherein the slide show (100) obtained in step a. comprises at least two slides, and wherein the method comprises the further step of:
automatically inserting (5000) one or more transition animations (240) for transitioning between the at least two slides.

4. The method of the preceding claim 3, wherein the one or more transition animations (240) comprise an animation of a human hand performing a wiping movement which at least partly clears a visual area of the audiovisual animation.

5. The method of any of the preceding claims, wherein the one or more entry animations (230) and / or the one or more transition animations (240) comprise one or more sound effects.

6. The method of any of the preceding claims, comprising the further steps of:
automatically removing (6000) from or making invisible in the slide show (100) the one or more portions of text (120), before the step of exporting (7000) the slide show; and
automatically re-inserting (8000) into or making visible in the slide show (100) the one or more portions of text (120), after the step of exporting (7000) the slide show.

7. The method of any of the preceding claims, comprising the further step of automatically removing (8000) from the slide show (100) the one or more entry animations (230) and / or the one or more transition animations (240), after the step of exporting the slide show.

8. The method of any of the preceding claims, wherein the slide show (100) comprises one or more references to or thumbnails of the one or more graphic images (110) and wherein the method comprises the further step of obtaining the one or more graphic images (110) from a media library (5).

9. The method of any of the preceding claims, wherein the step of exporting (7000) the slide show (100) to produce the audiovisual animation (200) comprises initiating an export function of a presentation program.

10. The method of any of the preceding claims 1 - 8, wherein the step of exporting (7000) the slide show (100) to produce the audiovisual animation (200) comprises the steps of:
playing the slide show;
capturing successive images of the played slide show (100) and storing the captured images on a storage device;
generating an audio track from the one or more speech sequences (220);
combining the captured images and the audio track into a video file to produce the audiovisual animation (200).

11. The method of any of the preceding claims, wherein the method is performed by a plugin (10) of a presentation program (1).

12. The method of the preceding claims 8 and 11, wherein the plugin (10) is provided on a client computer (C) and wherein the media library (5) is provided on a server computer (S), wherein the client computer (C) and the server computer (S) are connected over a network.

13. The method of the preceding claims 10 and 11, wherein the step of exporting (7000) the slide show (100) to produce the audiovisual animation (200) is performed by a rendering engine (7), wherein the plugin (10) is provided on a client computer (C) and wherein the rendering engine (7) is provided on a server computer (S), wherein the client computer (C) and the server computer (S) are connected over a network.

14. A computer program comprising instructions for implementing a method in accordance with any of the preceding claims 1 - 13.

15. A system for the automated production of an audiovisual animation (200), in particular a digital video clip, adapted for performing a method in accordance with any of the preceding claims 1 - 13.
